# EUROPÄISCHE PATENTSCHRIFT

(11) **EP 3 473 992 B1**
(45) Veröffentlichungstag und Bekanntmachung des Hinweises auf die Patenterteilung: **01.07.2020**
(21) Anmeldenummer: 18188654.0
(22) Anmeldetag: 13.08.2018
(51) Int. Cl.: G01L 5/00, G01B 7/16, G01L 1/16, G01L 1/22

(54) **MESSVORRICHTUNG ZUM MESSEN VON MECHANISCHEN KRÄFTEN UND / ODER DEHNUNGEN IN EINEM BAUTEIL**
MEASURING DEVICE FOR MEASURING MECHANICAL FORCES AND / OR STRESSES IN A COMPONENT
DISPOSITIF DE MESURE POUR MESURER DES FORCES MECANIQUES ET / OU DES CONTRAINTES DANS UN COMPOSANT

(30) Priorität: 18.10.2017 DE 102017009681
(43) Veröffentlichungstag der Anmeldung: 24.04.2019
(73) Patentinhaber: Baumer Electric AG, 8500 Frauenfeld (CH)
(72) Erfinder: Jürgens, Alexander, 8500 Frauenfeld (CH); Kuppel, Florian, 78256 Steisslingen (DE); Brönnimann, Stefan, 8370 Sirnach (CH)
(74) Vertreter: Strauss, Steffen

(56) Entgegenhaltungen:
- CH-A5- 684 442
- DE-U1- 9 106 043

## Beschreibung

### TECHNISCHES GEBIET

Die vorliegende Erfindung betrifft eine Messvorrichtung zum Messen von mechanischen Kräften und / oder Dehnungen in einem Bauteil.

### TECHNISCHER HINTERGRUND

Aus der DE 9106043 U1 ist eine Messvorrichtung zum Messen von mechanischen Quer-oder Längskräften bzw. Dehnungen in einer Bohrung eines Bauteils bekannt. Diese Messvorrichtung umfasst mindestens einen Sensor, welche in der betreffenden Bohrung durch einen dort beschriebenen Spannmechanismus entsprechend installiert wird. Bei dem dort beschriebenen Messsystem ist es erforderlich, dass für die Montage des Messsystems in einer Bohrung sich die Spannschalenvorrichtung und der Gewindekegel nicht rotatorisch zueinander verschieben. Ist dies nämlich der Fall, dann findet keine entsprechende Axialbewegung zwischen dem Aufnehmerkörper und dem Gewindekegel statt, was dazu führt, dass die Messvorrichtung nicht in der Bohrung verspannbar ist. Dies ist jedoch eine wichtige Voraussetzung, damit die von der Messvorrichtung erfassten Messwerte nicht verfälscht werden.

Ein weiterer Nachteil der vorgenannten Messvorrichtung besteht darin, dass diese sich nur wieder schwer aus der Bohrung lösen lässt. Die Ursache ist hierfür eine lokale und fest haftende Verbindung zwischen den Spannschalen und der Bohrung.

Bei der vorgenannten Messvorrichtung ist eine unverfälschte Messung der entsprechenden in der Bohrung des Bauteils auftretenden Quer- oder Längskräften bzw. den mechanischen Dehnungen nur möglich, wenn der Dehnungsabgriff der Spannschalen an der Bohrung verlustfrei erfolgt. Dies wird in der vorgenannten Messvorrichtung dadurch erreicht, dass die einzelnen Abgriffflächen der Spannschalen mit Rillen versehen sind. Dies ist jedoch nicht optimal, da diese Rillen einen hohen Abnutzungsgrad unterliegen und sich derartige Rillen in weiche Materialien des zu vermessenden Bauteils auf unerwünschte Weise bleibend einprägen können.

Aus der CH684442 ist ein Aufnehmer mit kathodisch aufgedampftem Widerstands-Messgitter und integriertem Verstärker bekannt, welcher Dehnungen in Sackloch- und Durchgangsbohrungen in Strukturen in beliebiger Tiefe und radialer Richtung erfassen kann. Der Aufnehmer kann mittels einer Metallhülse mit Boden direkt eingekapselt werden. Die Hülse soll elastisch sein, um das Vorspannen mittels einem Konus zu gewährleisten.

Es ist daher Aufgabe der vorliegenden Erfindung, eine Messvorrichtung zum Messen von mechanischen Kräften und / oder Dehnungen in einem Bauteil derart verbessert weiterzubilden, dass die eingangs beschriebenen Nachteile zumindest reduziert werden und eine hohe Genauigkeit der gemessenen mechanischen Kräfte und Dehnungen erzielt wird. Eine weitere Aufgabe besteht außerdem darin, die Montage- bzw. Deinstallation einer derartigen Messvorrichtung in einem Bauteil zu vereinfachen.

Erfindungsgemäß wird diese Aufgabe durch die Merkmale der unabhängigen Patentansprüche gelöst. Vorteilhafte Ausführungsformen der vorliegenden Erfindung sind Gegenstand der abhängigen Ansprüche, der Beschreibung sowie der Figuren. Ausführungsbeispiele der Erfindung sind in den Zeichnungen dargestellt und werden im Folgenden näher beschrieben.

Gemäß einem ersten Aspekt betrifft die Erfindung eine Messvorrichtung zum Messen von mechanischen Kräften und / oder Dehnungen in einem Bauteil, umfassend
- einen Aufnahmekörper mit mindestens einem Sensorelement;
- ein erstes Stützelement und ein zweites konusförmig ausgebildetes Stützelement;
- eine Spannschalenvorrichtung, welche aus wenigstens einem radial spreizbaren ersten Spannschalenelement und einem radial spreizbaren zweiten Spannschalenelement besteht, wobei das erste Spannschalenelement und das zweite Spannschalenelement benachbart durch einen Spalt voneinander beabstandet angeordnet sind und innenseitig jeweils konusförmige Flächen aufweisen; welche mit mindestens einem der konusförmig ausgebildeten Stützelemente in einem gleitenden Eingriff bringbar und durch eine axiale Abstandsänderung der beiden Stützelemente zueinander jeweils radial spreizbar sind; wobei der Aufnahmekörper zwischen dem ersten Spannschalenelement und dem zweiten Spannschalenelement angeordnet über die Stützelemente verbindbar ist, und
- mindestens ein Blockierelement, welches an mindestens einem der beiden Stützelemente anbringbar ist und wobei ein Abschnitt des Blockierelements in den Spalt zwischen dem ersten Spannschalenelement und dem zweiten Spannschalenelement der Spannschalenvorrichtung einführbar ist.

Der grundlegende Gedanke der erfindungsgemäßen Messvorrichtung besteht darin, dass infolge des Blockierelements, welches in einem Spalt oder einem Schlitz zwischen zwei benachbarten Spannschalenelementen der Spannschalenvorrichtung angeordnet ist, die Spannschalenvorrichtung und das mindestens eine Stützelement nicht rotatorisch zueinander verschiebbar sind, es also zu keiner rotatorischen Relativbewegung zwischen der Spannschalenvorrichtung und dem Stützelement kommen kann, wenn die Messvorrichtung nach Positionierung in einem Abschnitt einer Bohrung des Bauteils mit einer Wand der Bohrung verspannt wird.

Durch das Blockierelement, wird also sichergestellt, dass eine Verdrehung des Stützelements, welches auch als Gewindekegel bezeichenbar ist, relativ zu der Spannschalenvorrichtung gesperrt ist bzw. verhindert wird. Somit ist lediglich eine axiale Bewegung des Gewindekegels möglich.

Der wesentliche Vorteil, welcher durch die erfindungsgemäße Messvorrichtung erzielt wird, besteht deshalb darin, dass der Montageprozess der Messvorrichtung in einer Bohrung oder einem Bohrungsabschnitt eines zu vermessenden Bauteils erheblich erleichtert und effizienter gestaltet wird, da es wegen der Verhinderung eines Verdrehens des Stützelements der Messvorrichtung relativ zur Spannschalenvorrichtung nunmehr keine Probleme bei der Verspannung der Messvorrichtung mit dem zu vermessenden Bauteil gibt.

Gemäß einer Ausführungsform der vorliegenden Erfindung ist das mindestens eine Blockierelement als ein stiftförmiges oder als ein plattenförmiges Element ausgebildet. Dadurch wird der Vorteil erreicht, dass ein Verdrehen des mindestens einen Stützelements relativ zur Spannschalenvorrichtung effizient verhindert wird.

Gemäß einer Ausführungsform der vorliegenden Erfindung umfasst diese ein erstes Blockierelement und mindestens ein zweites Blockierelement, welche gemeinsam auf einem der Stützelemente zueinander radial versetzt, vorzugsweise um 3 x 120 Grad, positionierbar sind. Dadurch wird der Vorteil erreicht, dass effizient eine Verdrehung des als Gewindekegels bezeichneten Stützelements in der Spannschalenvorrichtung verhindert wird. Das erste Blockierelement und das mindestens zweite Blockierelement, welche also jeweils vorzugsweise um 120 Grad zueinander versetzt angeordnet sind, laufen also in den jeweiligen Spalten oder Schlitzen zwischen den einzelnen Spannschalenelementen der Spannschalenvorrichtung.

Gemäß einer Ausführungsform der vorliegenden Erfindung ist das erste Stützelement als ein kegelförmiges Frontelement ausgebildet, und ist das zweite Stützelement als ein, hinter dem ersten Stützelement positionierbares und kegelförmiges Rückelement ausgebildet. Dadurch wird der Vorteil erreicht, dass die Spannschalenvorrichtung optimal in dem Bauteil verspannt wird.

Gemäß einer Ausführungsform der vorliegenden Erfindung weist das kegelförmige Frontelement des ersten Stützelements einen konisch ausgeführten und sich geometrisch verjüngenden Frontabschnitt auf. Dadurch wird der Vorteil erreicht, dass eine Einführung der Messvorrichtung in eine Bohrung eines zu vermessenden Bauteils, insbesondere in sogenannte Stufenbohrungen, erleichtert wird.

Gemäß einer Ausführungsform der vorliegenden Erfindung umfasst das erste Stützelement ein nutförmiges Mitführelement umfasst, welches ausgebildet ist, bei einem Entfernen der Messvorrichtung aus einer Bohrung des Bauteils einen Abschnitt eines der Spannschalenelemente der Spannschalenvorrichtung aufzunehmen. Dadurch wird der Vorteil erreicht, dass ein einfacheres Demontieren der Messvorrichtung aus der Bohrung des Bauteils ermöglicht wird, da durch diese besondere Geometrie des ersten Stützelements, welches auch als ein Frontkegel bezeichnet werden kann, die Spannschalenvorrichtung durch eine Zugbewegung auf einfache Weise von dem Bauteil, mit welchem die Spannschalenvorrichtung verspannt ist, gelöst werden kann.

Gemäss einer Ausführungsform der vorliegenden Erfindung ist ein Eingreifmittel in der Messvorrichtung umfasst. Das Eingreifmittel ist ausgebildet, einen Kraftimpuls auf die wenigstens beiden Spannschalenelemente zu ermöglichen, um in vorteilhafter Weise die wenigstens beiden Spannschalenelemente auf einfache Art von dem Bauteil zu lösen.

Gemäß einer Ausführungsform der vorliegenden Erfindung ist das mindestens eine Sensorelement als ein Dehnungsmessstreifen oder als ein piezoelektrisches Sensorelement ausgebildet. Dadurch wird der Vorteil erreicht, dass die aufzunehmenden Kräfte oder Dehnungen, die von der Messvorrichtung bei entsprechender Verspannung mit dem zu vermessenden Bauteil erfasst werden, effizient erfassen werden.

Gemäß einer Ausführungsform der vorliegenden Erfindung umfasst das mindestens eine Sensorelement ein erstes Sensorelement und ein zweites Sensorelement. Dadurch wird der Vorteil erreicht, dass unterschiedliche Kräfte und Dehnungen, die im zu vermessenden Bauteil auftreten, effizient erfasst werden können.

Gemäß einer Ausführungsform der vorliegenden Erfindung umfasst mindestens eines der Spannschalenelemente der Spannschalenvorrichtung eine durch Laserbehandlung oder Anwendung eines Sandstrahlverfahrens aufgeraute Oberfläche. Durch eine Laserbehandlung wird der Vorteil erreicht, dass der Dehnungsabgriff verbessert wird, da dadurch eine sehr gute Dehnungsübertragung zu der Messvorrichtung erreicht wird. Zudem wird ein Einprägen der Spannschalenvorrichtung in das Material der Bohrung des Bauteils aufgrund der nur wenigen Mikrometer tiefen Struktur vermieden. Durch das Aufrauen der Oberfläche mittels Sandstrahlen wird eine diffuse und raue Oberfläche erzeugt, wodurch ebenso eine vorteilhafte Dehnungsübertragung erreicht wird. Auch wird dadurch ein Einprägen der Spannschalenvorrichtung in das Material der Bohrung des Bauteils aufgrund vermieden.

### BESCHREIBUNG DER FIGUREN

Weitere Ausführungsbeispiele der Erfindung sind in den Zeichnungen dargestellt und werden im Folgenden näher beschrieben.

Es zeigen:
- Fig. 1: eine schematische Abbildung der erfindungsgemäßen Messvorrichtung gemäß einer Ausführungsform der vorliegenden Erfindung;
- Fig. 1a: einen Ausschnitt der schematischen Abbildung der erfindungsgemäßen Messvorrichtung in Schnittansicht B-B mit den vertikal unterteilten Spannschalenelementen mit einer Anzahl von Blockierelementen, welche jeweils in einem Spalt zwischen benachbarten Spannschalenelementen angeordnet sind;
- Fig. 1b: einen Ausschnitt X der schematischen Abbildung der erfindungsgemäßen Messvorrichtung mit zwei Spannschalenelementen, die durch ein Blockierelement in einen Spalt voneinander beabstandet sind; und
- Fig. 2: eine schematische Abbildung in Schnittdarstellung A-A der erfindungsgemäßen Messvorrichtung der vorliegenden Erfindung gemäß einer in der Fig. 1 dargestellten Ausführungsform der Fig. 1.

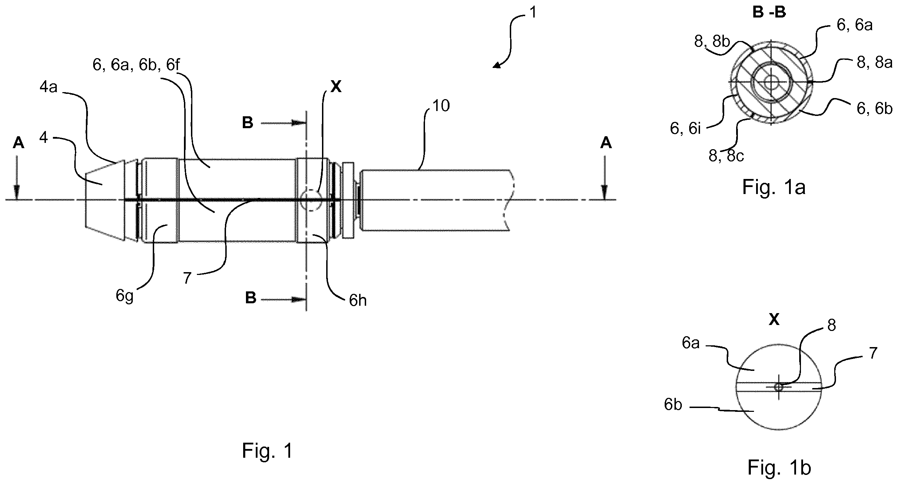

Fig. 1 zeigt eine schematische Abbildung der erfindungsgemäßen Messvorrichtung 1. Die Messvorrichtung 1 gemäß der Fig. 1 umfasst eine Spannschalenvorrichtung 6, ein Führungsmittel 10, welches als ein Rohr ausgeführt sein kann. Die Messvorrichtung 1 umfasst ein erstes Stützelement 4, welches einen verjüngten Frontabschnitt 4a umfasst. Zudem zeigt die Ausführungsform der Fig. 1 ein vorderes Abgriffelement 6g und ein hinteres Abgriffelement 6h zum Abgreifen der zu messenden Dehnungen und Kräfte. In der Fig. 1 sind zudem die einzelnen Schnittrichtungen A-A, B-B und X exemplarisch eingezeichnet, deren jeweilige Ansichten im Detail in den anderen Figuren näher dargestellt sind. Die einzelnen und zueinander benachbarten Spannschalenelemente 6a, 6b sind durch einen Spalt oder einen Schlitz 7 voneinander beabstandet, wie in der Fig. 1 dargestellt.

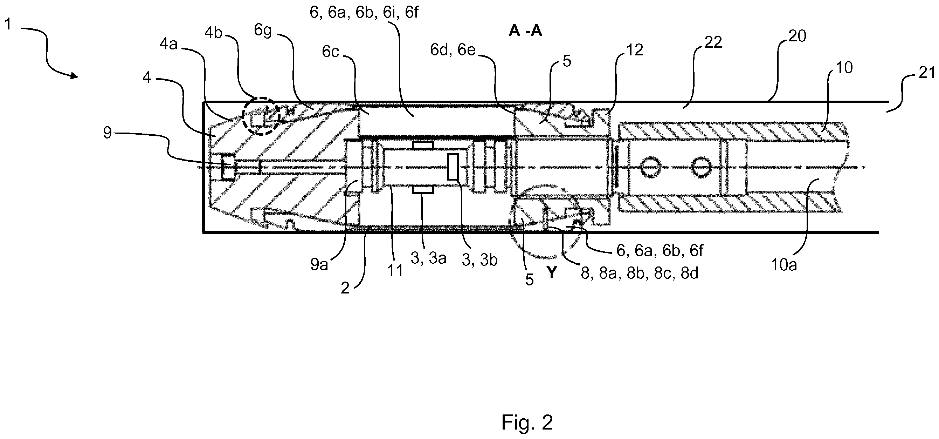

Fig. 1a zeigt einen Ausschnitt der schematischen Abbildung der erfindungsgemäßen Messvorrichtung 1 in Schnittansicht B-B mit vertikal unterteilten Spannschalenelementen 6, 6a, 6b, 6i mit einer Anzahl von Blockierelementen 8, 8a, 8b, 8c, welche jeweils in einem Spalt zwischen benachbarten Spannschalenelementen 6, 6a und 6b bzw. 6b und 6i exemplarisch angeordnet sind. Die jeweiligen Blockierelemente 8, 8a, 8b, 8c können als einzelne Stifte ausgeführt sein, die in den jeweiligen Spalten oder Schlitzen zwischen den einzelnen und zueinander benachbarten Spannschalenelementen angeordnet sind. Fig. 1a zeigt ein erstes Spannschalenelement 6a, welches zu einem zweiten Spannschalenelement 6b benachbart und beabstandet ist. Zwischen dem ersten Spannschalenelement 6a und dem zweiten Spannschalenelement 6b befindet sich - wie in der Schnittdarstellung X der Fig. 1b deutlicher dargestellt - ein Spalt oder ein Schlitz 7, in welchem jeweils ein Blockierelement 8, 8a, 8b, 8c verläuft. Die Fig. 1b zeigt dabei ein erstes Blockierelement 8a, ein zweites Blockierelement 8b und ein drittes Blockierelement 8c. In der Fig. 1a ist ersichtlich, dass die einzelnen drei Blockiermittel 8, 8a, 8b, 8c radial zueinander ausgerichtet und jeweils um 120 Grad zueinander versetzt angeordnet sind. Auf diese Weise wird eine Verdrehung der Stützelemente 4, 5 bzw. der jeweiligen Gewindekegel relativ zur Spannschalenvorrichtung 6 verhindert. Damit ist zwar eine axiale Verschiebung der einzelnen Stützelemente 4, 5 zueinander möglich, aber eben keine rotatorische Relativbewegung zwischen einzelnen Spannschalen 6a, 6b, 6i der Spannschalenvorrichtung 6 und den jeweiligen als Gewindekegel bezeichneten einzelnen Stützelementen 4, 5, wie auch in der Fig. 2 noch näher dargestellt.

Fig. 2 zeigt eine schematische Abbildung in Schnittdarstellung A-A der erfindungsgemäßen Messvorrichtung 1 der vorliegenden Erfindung gemäß einer in der Fig. 1 dargestellten Ausführungsform der Fig. 1.

Die Messvorrichtung 1 zum Messen von mechanischen Kräften und / oder Dehnungen ist in der dargestellten Ausführungsform in einer Bohrung 21 eines Bauteils 20 montiert und entsprechend verspannt. Die Messvorrichtung 1 gemäß der Ausführungsform der Fig. 2 umfasst einen Aufnahmekörper 2 mit mindestens einem Sensorelement 3, ein erstes Stützelement 4 und ein zweites Stützelement 5, eine Spannschalenvorrichtung 6, welche aus ein einem - wie in der Fig. 1b exemplarisch dargestellt - radial spreizbaren ersten Spannschalenelement 6a und einem radial spreizbaren zweiten Spannschalenelement 6b besteht, wobei das erste Spannschalenelement 6a und das zweite Spannschalenelement 6b vertikal unterteilt und durch in dieser Darstellung nicht sichtbaren Spalt 7 - siehe jedoch Fig. 1b - voneinander beabstandet angeordnet sind. Der Aufnahmekörper 2 ist mit dem ersten Spannschalenelement 6a und dem zweiten Spannschalenelement 6b über die Stützelemente 4, 5 verbindbar. Das erste Stützelement 4 und das zweite Stützelement 5 werden auch jeweils als Gewindekegel bezeichnet. Die Ausführungsform der erfindungsgemäßen Messvorrichtung 1 zeigt in der Fig. 2 ein als Stift ausgebildetes Blockierelement 8, 8a, 8b, 8c, welches an dem zweiten Stützelement 5 angebracht ist. Ein Abschnitt 8a des jeweiligen Blockierelements 8, 8a, 8b, 8c ist dabei in den Spalt 7 zwischen dem ersten Spannschalenelement 6a und dem zweiten Spannschalenelement 6b der Spannschalenvorrichtung 6 eingeführt.

Gemäß der Fig. 2 weisen das erste Spannschalenelement 6a und das zweite Spannschalenelement 6b der Spannschalenvorrichtung 6 an ihren Innenflächen jeweils konusförmige Flächen 6d; 6e auf, welche mit mindestens einem der ebenfalls konusförmig ausgebildeten Stützelemente 4, 5 in einem gleitenden Eingriff bringbar sind, wobei die beiden Spannschalenelemente 6a, 6b durch eine axiale Abstandsänderung der beiden Stützelemente 4, 5 zueinander jeweils radial spreizbar sind.

Das jeweilige Blockierelement 8, 8a, 8b, 8c kann dabei als ein stiftförmiges oder als ein plattenförmiges Element ausgebildet sein.

Die Messvorrichtung 1 gemäß der Ausführungsform der Fig. 2 zeigt ferner, dass das erste Stützelement 4 als ein kegelförmiges Frontelement ausgebildet ist, und dass das zweite Stützelement 5 als ein, hinter dem ersten Stützelement 4 positionierbares und kegelförmiges Rückelement oder Gewindekegel ausgebildet ist.

Die Messvorrichtung 1 gemäß der Ausführungsform der Fig. 2 zeigt zudem, dass das kegelförmige Frontelement des ersten Stützelements 4 einen konisch ausgeführten und sich geometrisch verjüngenden Frontabschnitt 4a aufweist, um die Demontage der Messvorrichtung 1 aus der Bohrung 21 des Bauteils 20 zu vereinfachen. Zudem kann durch eine entsprechende Zugbewegung die Spannschalenvorrichtung 6, wenn die einzelnen Spannschalenelemente 6a, 6b in einem montierten Zustand - wie dieser in der Fig. 2 dargestellt - entsprechend radial gespreizt wurden, um an einer Wand 22 der Bohrung 21 des Bauteils 20 zu haften und die Messvorrichtung 1 innerhalb der Bohrung 21 des Bauteils 20 entsprechend zu verspannen. Wie in der Fig. 2 dargestellt ist der erste Gewindekegel bzw. der erste Gewindekegelabschnitt oder auch das erste Stützelement 4 über eine Gewindebohrung 9 und einer Sicherungsschraube 9a entsprechend angebracht. Dies ist jedoch nur eine exemplarisch dargestellte Möglichkeit.

Die Messvorrichtung 1 gemäß der Ausführungsform der Fig. 2 umfasst zudem ein Führungsmittel 10, das als ein hohles Rohr mit einer Innenbohrung 10a des Aufnahmekörpers 2 ausgebildet ist.

Gemäß der Ausführungsform der Messvorrichtung 1 der Fig. 2 umfasst das erste Stützelement 4 oder der erste Gewindekegel oder der erste Gewindekegelabschnitt ein nutförmiges Mitführelement 4b. Dieses ist ausgebildet, bei einem Entfernen der Messvorrichtung 1 aus der Bohrung 21 einen Abschnitt 6c eines der Spannschalenelemente 6a; 6b, 6i der Spannschalenvorrichtung 6 gemäß der Fig. 1a aufzunehmen.

Gemäß der Ausführungsform der Messvorrichtung 1 der Fig. 2 ist ein Messmittel 11 dargestellt, welches als Aufnahmemittel für ein erstes Sensorelement 3, 3a und ein zweites Sensorelement 3, 3b dient. Mit den jeweiligen Sensorelementen 3, 3a, 3b können Längs- bzw. Querdehnungen der Bohrung 21 des Bauteils 20 erfasst werden. Die Sensorelemente 3, 3a, 3b können dabei jeweils als ein Dehnungsmessstreifen oder als ein piezoelektrisches Sensorelement ausgebildet sein.

Die Messvorrichtung 1 der Fig. 2 umfasst ein Eingreifmittel 12, das auch als ein sogenannter Ausschubbund bezeichnet werden kann. Dieser Fortsatz des zweiten Stützelements 5 ermöglicht ein einfacheres Lösen der Messvorrichtung 1 aus einer Wand 22 der Bohrung 20, wenn die Messvorrichtung 1 mit den Sensorelementen 3, 3a, 3b wieder demontiert werden soll.

Gemäß der Ausführungsform der Messvorrichtung 1 der Fig. 2 weist mindestens eines der Spannschalenelemente 6a, 6b der Spannschalenvorrichtung 6 eine durch Laserbehandlung oder Anwendung eines Sandstrahlverfahrens aufgeraute Oberfläche 6f auf. Dadurch kann der Dehnungsabgriff verbessert werden.

## Patentansprüche

1. Messvorrichtung (1) zum Messen von mechanischen Kräften und / oder Dehnungen in einem Bauteil (20), umfassend:
- einen Aufnahmekörper (2) mit mindestens einem Sensorelement (3);
- ein erstes und ein zweites konusförmig ausgebildetes Stützelement (4, 5);
- eine Spannschalenvorrichtung (6), welche aus wenigstens einem radial spreizbaren ersten Spannschalenelement (6a) und einem radial spreizbaren zweiten Spannschalenelement (6b) besteht, wobei die beiden Spannschalenelemente (6a; 6b) benachbart durch einen Spalt (7) voneinander beabstandet angeordnet sind und innenseitig jeweils konusförmige Flächen (6d; 6e) aufweisen, welche mit mindestens einem der konusförmig ausgebildeten Stützelemente (4,5) in einem gleitenden Eingriff bringbar und durch eine axiale Abstandsänderung der beiden Stützelemente (4,5) zueinander jeweils radial spreizbar sind;
- wobei der Aufnahmekörper (2) zwischen dem ersten und dem zweiten Spannschalenelement (6a, 6b) angeordnet und über die Stützelemente (4; 5) verbindbar ist;
**gekennzeichnet durch** mindestens ein Blockierelement (8), welches an mindestens einem der beiden Stützelemente (4; 5) anbringbar ist und wobei ein Abschnitt (8c) des Blockierelements (8) in den Spalt (7) zwischen dem ersten Spannschalenelement (6a) und dem zweiten Spannschalenelement (6b) der Spannschalenvorrichtung (6) einführbar ist.

2. Messvorrichtung (1) nach Anspruch 1, wobei das mindestens eine Blockierelement (8) als ein stiftförmiges oder als ein plattenförmiges Element ausgebildet ist.

3. Messvorrichtung (1) nach einem der vorangegangenen Ansprüche, umfassend ein erstes Blockierelement (8a) und mindestens ein zweites Blockierelement (8b), welche gemeinsam auf einem der Stützelemente (4; 5) zueinander radial versetzt, vorzugsweise um 120 Grad, positionierbar sind.

4. Messvorrichtung (1) nach einem der vorangegangenen Ansprüche, wobei das erste Stützelement (4) als ein kegelförmiges Frontelement ausgebildet ist, und wobei das zweite Stützelement (5) als ein, hinter dem ersten Stützelement (4) positionierbares und kegelförmiges Rückelement ausgebildet ist.

5. Messvorrichtung (1) nach Anspruch 4, wobei das das kegelförmige Frontelement des ersten Stützelements (4) einen konisch ausgeführten und sich geometrisch verjüngenden Frontabschnitt (4a) aufweist.

6. Messvorrichtung (1) nach einem der vorangegangenen Ansprüche, wobei das erste Stützelement (4) ein nutförmiges Mitführelement (4b) umfasst, welches ausgebildet ist, bei einem Entfernen der Messvorrichtung (1) aus der Bohrung (21) einen Abschnitt (6c) eines der Spannschalenelemente (6a; 6b) der Spannschalenvorrichtung (6) aufzunehmen.

7. Messvorrichtung (1) nach einem der vorangegangenen Ansprüche, wobei ein Eingreifmittel (12) umfasst ist, wobei das Eingreifmittel (12) ausgebildet ist, einen Kraftimpuls auf die wenigstens beiden Spannschalenelemente (6a; 6b) zu ermöglichen, um die wenigstens beiden Spannschalenelemente (6a; 6b) von dem Bauteil (20) zu lösen.

8. Messvorrichtung (1) nach einem der vorangegangenen Ansprüche, wobei das mindestens eine Sensorelement (3) als ein Dehnungsmessstreifen oder als ein piezoelektrisches Sensorelement ausgebildet ist.

9. Messvorrichtung (1) nach einem der vorangegangenen Ansprüche, wobei das mindestens eine Sensorelement (3) ein erstes Sensorelement (3a) und ein zweites Sensorelement (3b) umfasst.

10. Messvorrichtung (1) nach einem der vorangegangenen Ansprüche, wobei mindestens eines der Spannschalenelemente (6a; 6b) der Spannschalenvorrichtung (6) eine durch Laserbehandlung oder Anwendung eines Sandstrahlverfahrens aufgeraute Oberfläche (6f) aufweist.

## Claims

1. Measuring device (1) for measuring mechanical forces and/or material elongation in a component (20), comprising:
- A holding body (2) with at least one sensor element (3);
- a first and a second cone-shaped supporting element (4, 5);
- a clamping shell device (6) consisting of at least one radially expandable first clamping shell element (6a) and a radially expandable second clamping shell element (6b), whereby the two clamping shell elements (6a; 6b) are located adjacent to one another and spaced apart from one another by a gap (7) and whereby each has cone-shaped surfaces (6d; 6e) on the inside which can be brought into sliding engagement with at least one of the cone-shaped supporting elements (4, 5) and can be expanded radially by changing the axial distance between the two supporting elements (4, 5);
- whereby the holding body (2) is located between the first and second clamping shell elements (6a, 6b) and can be connected by means of the supporting elements (4; 5);
**characterized by** at least one blocking element (8) which can be attached to at least one of the two supporting elements (4; 5) and whereby one section (8c) of the blocking element (8) can be inserted into the gap (7) between the first clamping shell element (6a) and the second clamping shell element (6b) of the clamping shell device (6).

2. Measuring device (1) in accordance with Claim 1, whereby the at least one blocking element (8) is designed as a pin-shaped or as a plate-shaped element.

3. Measuring device (1) in accordance with any one of the above Claims, comprising a first blocking element (8a) and at least one second blocking element (8b), which can be positioned together on one of the supporting elements (4; 5) so that they are radially offset with respect to one another, preferably by 120 degrees.

4. Measuring device (1) in accordance with any one of the above Claims, whereby the first supporting element (4) is designed as a cone-shaped front element, and whereby the second supporting element (5) is designed as a cone-shaped rear element which can be positioned behind the first supporting element (4).

5. Measuring device (1) in accordance with Claim 4, whereby the cone-shaped front element of the first supporting element (4) has a cone-shaped and geometrically tapering front section (4a).

6. Measuring device (1) in accordance with any one of the above Claims, whereby the first supporting element (4) comprises a groove-shaped entrainment element (4b) which is designed to hold a section (6c) of one of the clamping shell elements (6a; 6b) of the clamping shell device (6) when the measuring device (1) is removed from the bore (21).

7. Measuring device (1) in accordance with any one of the above Claims, whereby an engagement means (12) is included, said engagement means (12) being designed to permit a force pulse onto the at least two clamping shell elements (6a; 6b) in order to release the at least two clamping shell elements (6a; 6b) from the component (20).

8. Measuring device (1) in accordance with any one of the above Claims, whereby the at least one sensor element (3) is designed as a strain gage or as a piezoelectric sensor element.

9. Measuring device (1) in accordance with any one of the above Claims, whereby the at least one sensor element (3) comprises a first sensor element (3a) and a second sensor element (3b).

10. Measuring device (1) in accordance with any one of the above Claims, whereby at least one of the clamping shell elements (6a; 6b) of the clamping shell device (6) has a surface (6f) roughened by laser treatment or by the application of a sandblasting process.

## Revendications

1. Dispositif de mesure (1) permettant de mesurer des forces et/ou des contraintes mécaniques dans un composant (20), comprenant :
- un corps de réception (2) doté d'au moins un élément de détection (3) ;
- un premier et un second élément de support de forme conique (4, 5) ;
- un dispositif de coquille (6), composé d'au moins un premier élément de coquille extensible radialement (6a) et un second élément de coquille extensible radialement (6b), les deux éléments de coquille (6a ; 6b) étant espacés l'un de l'autre, de manière adjacente, par un interstice (7) et présentant chacun à l'intérieur des surfaces de forme conique (6d ; 6e), qui peuvent être mises en prise de manière coulissante avec au moins un des éléments de support de forme conique (4, 5) et sont chacune axialement extensibles l'une par rapport à l'autre du fait d'une modification de distance axiale des deux éléments de support (4, 5) ;
- le corps de réception (2) étant disposé entre le premier et le second élément de coquille (6a, 6b) et pouvant être raccordé par le biais des éléments de support (4 ; 5) ;
**caractérisé en ce qu'**au moins un élément de blocage (8) peut être placé sur au moins un des deux éléments de support (4 ; 5) et une section (8c) de l'élément de blocage (8) peut être insérée dans l'interstice (7) entre le premier élément de coquille (6a) et le second élément de coquille (6b) du dispositif de coquille (6).

2. Dispositif de mesure (1) selon la revendication 1, le au moins un élément de blocage (8) se présentant sous la forme d'un élément en forme de tige ou de plaque.

3. Dispositif de mesure (1) selon l'une des revendications précédentes, comprenant un premier élément de blocage (8a) et au moins un second élément de blocage (8b), qui peuvent être décalés radialement l'un par rapport à l'autre sur un des éléments de support (4 ; 5), de préférence positionnés à 120 degrés.

4. Dispositif de mesure (1) selon l'une des revendications précédentes, le premier élément de support (4) se présentant sous la forme d'un élément avant de forme conique, et le second élément de support (5) se présentant sous la forme d'un élément arrière de forme conique positionnable derrière le premier élément de support (4).

5. Dispositif de mesure (1) selon la revendication 4, l'élément avant de forme conique du premier élément de support (4) présentant une section avant (4a) de forme conique et s'effilant sur le plan géométrique.

6. Dispositif de mesure (1) selon l'une des revendications précédentes, le premier élément de support (4) comprenant un élément d'entraînement en forme de rainure (4b), qui est conçu pour recevoir une section (6c) d'un élément de coquille (6a ; 6b) du dispositif de coquille (6) lors du retrait du dispositif de mesure (1) du trou (21).

7. Dispositif de mesure (1) selon l'une des revendications précédentes, un moyen de prise (12) étant entouré, le moyen de prise (12) étant conçu pour permettre une impulsion de force sur les au moins deux éléments de coquille (6a ; 6b), pour détacher les au moins deux éléments de coquille (6a ; 6b) du composant (20).

8. Dispositif de mesure (1) selon l'une des revendications précédentes, le au moins un élément de détection (3) se présentant sous la forme d'une jauge de contrainte ou d'un élément de détection piézoélectrique.

9. Dispositif de mesure (1) selon l'une des revendications précédentes, le au moins un élément de détection (3) comprenant un premier élément de détection (3a) et un second élément de détection (3b).

10. Dispositif de mesure (1) selon l'une des revendications précédentes, au moins un des éléments de coquille (6a ; 6b) du dispositif de coquille (6) présentant une surface (6f) rendue rugueuse par un traitement au laser ou l'application d'un procédé de sablage.
